# EUROPEAN PATENT SPECIFICATION

(11) **EP 4 032 634 B1**
(45) Date of publication and mention of the grant of the patent: **30.08.2023**
(21) Application number: 22151957.2
(22) Date of filing: 18.01.2022
(51) Int. Cl.: B21F 27/12, B23K 37/02

(54) **PILE CAGE MACHINE PROVIDED WITH WELDING UNIT**
PFAHLKORBMASCHINE MIT SCHWEISSEINHEIT
MACHINE DE CAGE DE PILIER DOTÉE D'UNE UNITÉ DE SOUDAGE

(30) Priority: 22.01.2021 IT 202100001202
(43) Date of publication of application: 27.07.2022
(73) Proprietor: EMG Societa' A Responsabilita' Limitata, 64010 Colonnella (TE) (IT)
(72) Inventor: DI CARLO, Sergio, 64014 Teramo (IT)
(74) Representative: Baldi, Claudio

(56) References cited:
- EP-A1- 2 435 200
- DE-A1-102018 112 925
- IT-A1- AN20 090 007
- IT-A1- MC20 080 086
- JP-A- H06 134 540
- KR-B1- 101 970 538

## Description

The present patent application for industrial invention relates to a pile cage machine provided with a welding unit, as well as to the welding method implemented by means of said pile cage machine.

It should be immediately noted that a pile cage machine is a machine that is normally used to make steel frameworks, which are technically known as "cages", for the realization of reinforced concrete piles.

Reinforced concrete piles consist of a steel core formed of a reinforcement made of steel, steel iron or the like, depending on the requirements, which is embedded in the concrete. Technically speaking, said reinforcement is known as a "cage".

The piles can generally have a circular or a polygonal cross-section, and the internal reinforcement usually follows the shape of such a section, with a set of longitudinal steel rods or longitudinal metal bars transversely joined by one or more rods that are wound on the outside of the longitudinal rods along a helical trajectory and fixed to said longitudinal rods by means of welding or binding.

The reinforcement is made of a set of metal rods or bars that are normally arranged according to the shape of the pole to be reinforced: for example, in case of cylindrical piles, the longitudinal rods will be arranged in the shape of a cylinder with a square base, and so on.

The longitudinal rods are defined as "bars", whereas the rod that is wound around the bars along a helical trajectory is defined as "wire spiral".

The pile cage machines of the prior art comprise a supporting and guiding base for an opposite pair of heads, of which one head is movable and slides along a direction parallel to the longitudinal axis of the base.

The two heads house identical synchronously rotating disks, each one of them being equipped with an annular set of bushings, in a number equal to the number of the bars of the cage to be made.

More precisely, the bushings situated in the disk mounted on the head that slides with respect to the base are suitable for supporting and tightening the bar that is inserted through them, whereas the bushings situated in the disk mounted on the head that is fixed to the base are suitable for supporting and guiding the bar that is inserted through them, allowing said bar to slide freely.

In fact, each bar is first inserted into the bushings of the disk housed in the fixed head and is then inserted and tightened into the bushings of the disk housed in the movable head, which can thus act as a carriage for simultaneously moving all the bars that are inserted through said fixed head.

Said pile cage machines also comprise a unit for handling and transporting the wire spiral, which is moved forward in a direction orthogonal to the sliding direction of said movable head, in such a way as to tangentially intersect the bars supported astride the two aforementioned heads.

Evidently, when the movable head is moved away relative to the fixed head, with the simultaneous synchronous rotation of the two rotating disks, the wire spiral comes in contact with each bar in correspondence of a set of points situated along a helical trajectory with a predetermined pitch, which is obviously a function of the forward moving speed of the movable head.

By varying said speed, it is possible to implement a "spiraling" of the cage with a different predetermined pitch, in correspondence of different longitudinal sections of the cage.

Finally, said pile cage machines comprise a welding unit suitable for being intermittently operated to weld the wire spiral externally with respect to every bar of the cage that comes in contact with said wire spiral during the operation of the pile cage machine.

In particular, said welding unit comprises a welding torch mounted on a carriage that is free to make short travels along the theoretical axis of said helical trajectory.

The travels of said carriage are determined by the motion imposed on the carriage by the bars that pass in front of said welding unit.

As a matter of fact, said carriage is equipped with a hook that rhythmically fastens the bar in the point where the welding of the wire spiral is to be performed by said torch.

In short, the fastening of the bar in transit generates the motion of the carriage and the torch, which is already positioned correctly with respect to the point of intersection between bar and wire spiral, performs the welding on command.

Evidently, the welding that is performed in this way is a spot welding because there is no relative motion between the carriage and the wire spiral or, otherwise said, between the torch and the intersected sections of the wire spiral and of the bar in transit.

EP2435200A1 describes a machine used for making reinforcement cages as disclosed in the preamble of claim 1.

ITMC20080086A1 discloses a soldering device for metal cages comprising a plurality of rods on which a rod is spirally wound. Said soldering device comprises a roto-translation device suitable to allow a roto-translation of the cage so that the rods perform a rotation around an axis and at the same time a translation parallel to the axis of rotation, a feeding device adapted to feed said spiral transversely towards the rods, a carriage which follows the spiral and an arc welding torch mounted on the carriage.

JPH06134540A discloses a welding method for the manufacturing of reinforced cages.

KR101970538B1 discloses a method and a device for the manufacturing of a reinforced cage.

ITAN20090007A1 discloses a welding unit suitable for welding a metal rod to a bundle of irons in the creation of a building reinforcement.

DE102018112925A1 discloses a cage welding machine for producing a reinforcement body comprising a resistance welding system and an inert gas welding system.

The purpose of the present invention is to realize a pile cage machine that is capable of performing a welding seam and not just a welding spot between the bars of the cage and the wire spiral.

Such a purpose has been conceived after a critical observation of all the negative aspects of spot welding.

Firstly, the strength and the reliability of spot welding are certainly lower than those guaranteed by a welding seam, due to the fact that the welding seam extends and operates over a larger contact surface.

Secondly, linear welding is less invasive than spot welding and therefore less risky in terms of compromising the mechanical characteristics of the material that is being processed.

In fact, especially in the case of large-diameter bars, spot welding requires a larger, deeper welding spot to ensure a proper, resistant bonding between the parts. Such a result can be achieved in one of the following two alternative ways:
- by increasing the welding current and the depth of the smelting bath, with consequent very high invasiveness on the section of the bar, said invasiveness being in direct proportion to the diameters of the bar and of the wire spiral. Obviously, an increase of said diameters requires the realization of a stronger welding spot, which is capable of withstanding the higher weights involved and the higher stress during handling;
- by increasing the welding time on the spot, in direct proportion to the dimensions of the cross-sections of said bars and of the wire spiral.

The aforementioned drawbacks and limitations can be completely eliminated by replacing the spot welding with linear welding, which is capable of realizing a welding seam that significantly increases the quality of the final product.

In this perspective, the purpose of the present invention is to realize a pile cage machine equipped with a welding unit capable of performing a welding seam astride the intersection points between the wire spiral and the bars of the cage.

A further scope of the invention is to realize said linear welding unit in an economical and reliable manner.

These purposes have been achieved by the pile cage machine according to the invention, whose main features are listed in the appended independent claims.

Advantageous realizations appear from the dependent claims.

For the sake of clarity, the description of the pile cage machine according to the invention continues with reference to the attached drawings, which are shown for illustrative purposes only and certainly not as a limitation, wherein:

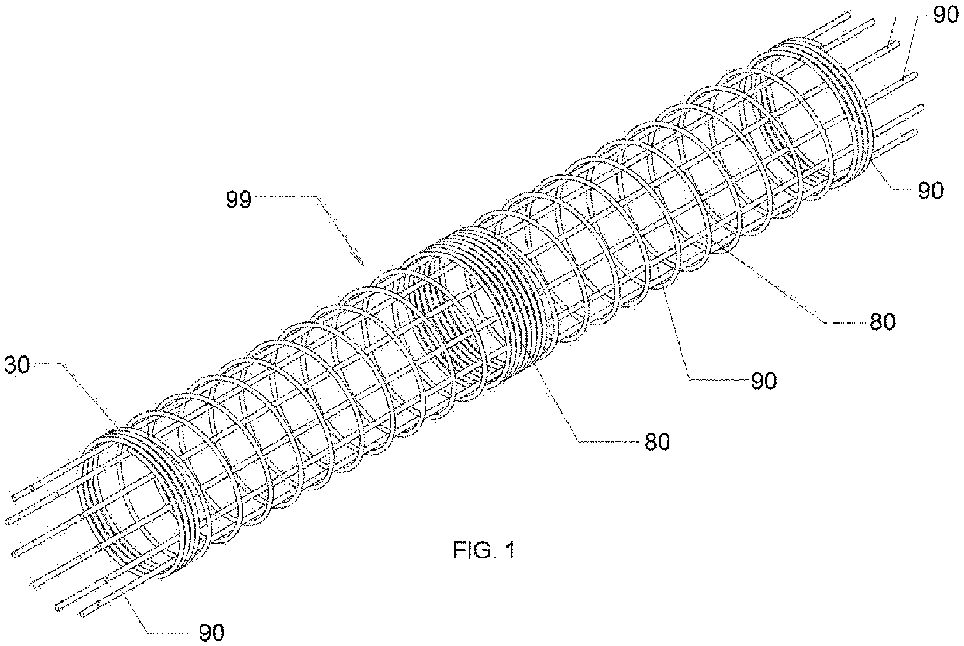

- Fig. 1 is schematic three-dimensional view of a cage for reinforced concrete piles of the prior art;
- Fig. 2 is a schematic three-dimensional view of the pile cage machine according to the invention;
- Fig. 3 is an enlarged view of a detail of Fig. 2, aimed at better understanding the configuration and the freedom of motion of the welding unit;
- Fig. 4 is an enlargement of Fig. 3, aimed at better understanding the torch-holding carriage that is an integral part of said welding unit;
- Fig. 5 shows the welding seam performed astride the tangential intersection point between the bars and the wire spiral of the cage.

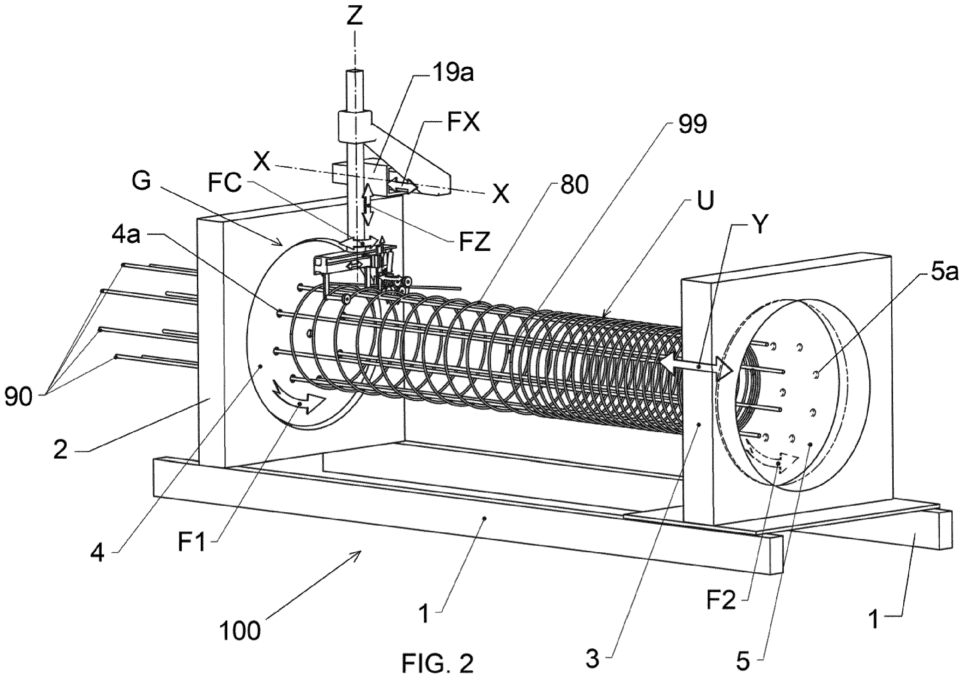

With reference to Fig. 2, the pile cage machine (100) comprises a linear welding unit (G) that cooperates with an operating unit (U) suitable for winding a wire spiral (80) outside an annular set of bars (90) along a helical trajectory, in such a way to realize a metal cage (99) suitable for being used as reinforcement for reinforced concrete piles.

According to the constructive and functional layout of the prior art, the operating unit (U) comprises a supporting and guiding base (1) for an opposite pair of identical heads (2 and 3), of which only one (3) is movable and slides along a direction (Y) parallel to the longitudinal axis of the base (1).

The two heads house identical synchronously rotating disks (4 and 5), each one of them being equipped with an identical set of annular bushings, in a number equal to the bars (90) of the cage (99) to be made.

As a matter of fact, said direction (Y) coincides with the axis of rotation of the rotating disks (4 and 5).

More precisely, the bushings (5a) situated in the disk (5) mounted on the movable head (3) are suitable for supporting and tightening the bar (90) that passes through them, whereas the bushings (4a) situated in the disk (4) mounted on the fixed head (2) are suitable for supporting and guiding the bar (90) that passes through them, allowing it to slide freely.

Furthermore, the pile cage machine (100) comprises a handling and transporting unit (25) of said wire spiral (80), which is moved forward in a direction orthogonal to the sliding direction (Y) of said movable head (3), in such a way as to tangentially intersect the various bars (90) supported astride the two heads (2 and 3).

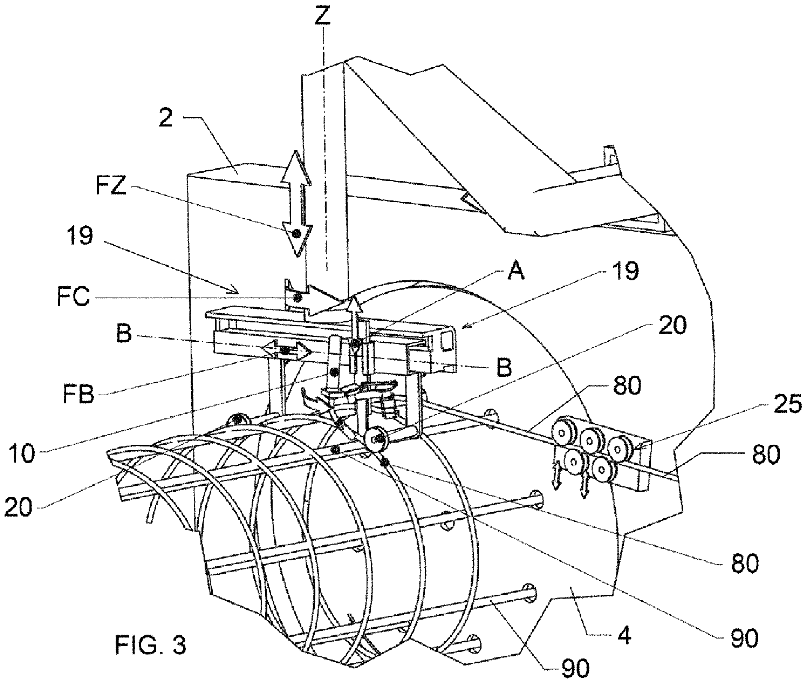

Such a handling and transporting unit (25) of said wire spiral (80) is only partially shown in Fig. 3, it being of known type, having a structural configuration and operating modes that are fully equivalent to those of the pile cage machines of the prior art that are equipped with a spot-welding unit.

As already mentioned, the pile cage machine (100) also comprises a linear welding unit (G) that, in turn, comprises a welding torch (10) mounted on a carriage (19) articulatedly supported by a supporting frame (19a) that is fixed to the fixed head (2).

With respect to said fixed supporting frame (19a), the carriage (19) has several degrees of freedom and more precisely it can:
- make alternate translations along an axis (X) parallel to the axis of rotation (Y) of the rotating disks (4 and 5), as indicated by the arrow (FX) in Fig. 2;
- make alternate translations along an axis (Z) orthogonal to said axis (X), as indicated by the arrow (FZ) in Fig. 2;
- make alternate rotations around said axis (Z), as indicated by the arrow (FC) in Fig. 2;
- make alternate translations along an axis (B) perpendicular to said two axes (X and Z), as indicated by the arrow (FB) in Fig. 3.

However, said carriage (19) is not provided with autonomous motion, it being moved by the bar (90) that is intercepted from time to time by the wire spiral (80).

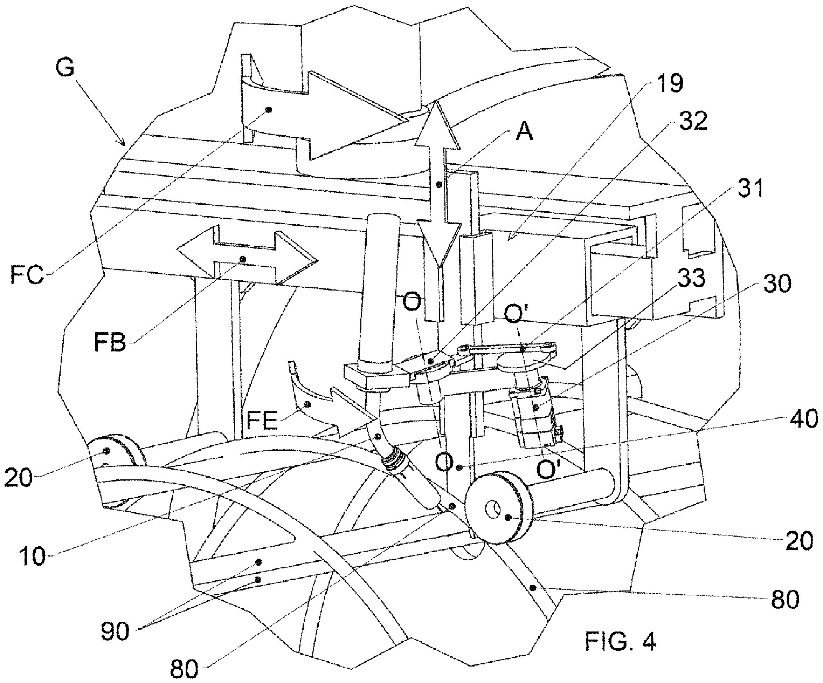

Said carriage (19) is suitably equipped with a forked hook (40) that slides in the direction (A) shown in Fig. 4, which is moved forward at the right moment to make the carriage (19) integral with the bar (90) in transit that is intercepted from time to time by the wire spiral (80).

Finally, said carriage (19) comprises a pair of idle pulleys (20), whose grooves are permanently engaged with the outside of the wire spiral (80), in such a way that the direction assumed by the carriage (19) with respect to its supporting frame (19a) also depends on the angle of the helical winding trajectory of the wire spiral (80), that is to say on the pitch of said helical trajectory.

The cage (99) is machined by rotating the rotating disk (4) in the direction indicated by the arrow (F1) in Fig. 2.

The rotating disk (5) is synchronized with the disk (4), in such a way that it is rotated in the same direction, as indicated by the arrow (F2) in Fig. 2.

During the rotation of the rotating disks (4 and 5) in the same direction, the movable head (3) is moved away from the fixed head (2), thus determining the pitch of the helical winding trajectory of the wire spiral (80) around the annular set of bars (90).

During the rotation of the rotating disks (4 and 5) in the same direction and the simultaneous translation of the movable head (3), a proximity device (not shown in the figure) automatically acquires the position of the bars (90) and enables the intervention of said forked hook (40), which is moved forward along said direction (A) until it comes into contact with the bar (90).

Since the fastening is performed and maintained for a preset time during the roto-translatory motion of the cage (99) that is being machines, said carriage (19) is forced to move along the direction of the axis of the helical winding trajectory of the wire spiral (80).

During such a step, the welding torch (20) performs the welding between the bar (90) and the wire spiral (80).

The position of the torch (90) relative to the bar (90) and to the wire spiral (80) that are being welded is determined by the forked hook (40) attached to the bar (90) and by the two pulleys (20) engaged with the wire spiral (80).

As a matter of fact, during the welding step, the carriage (19) and the welding torch (10) are moved as indicated by the arrows (FX, FZ, FC, FB).

It must be noted that said welding torch (10) is mounted on the carriage (19) by means of a set of levers (31, 32 and 33) operated by a motor (30), which impose independent simultaneous travels on the welding torch (10) with respect to the travels made by the carriage (19).

More precisely, said welding torch (10) is mounted on a first crank (32) that oscillates around an axis of rotation (O) and is coupled with a connecting rod (31), which is in turn coupled with a second crank (33) that oscillates around an axis of rotation (O') and is directly driven by said motor (30).

More precisely, on command, a travel according to the arrow (FE) indicated in Fig. 4 can be imposed on the welding torch (10), during which said welding torch (10) performs a rotation around said axis (O), always remaining parallel to itself.

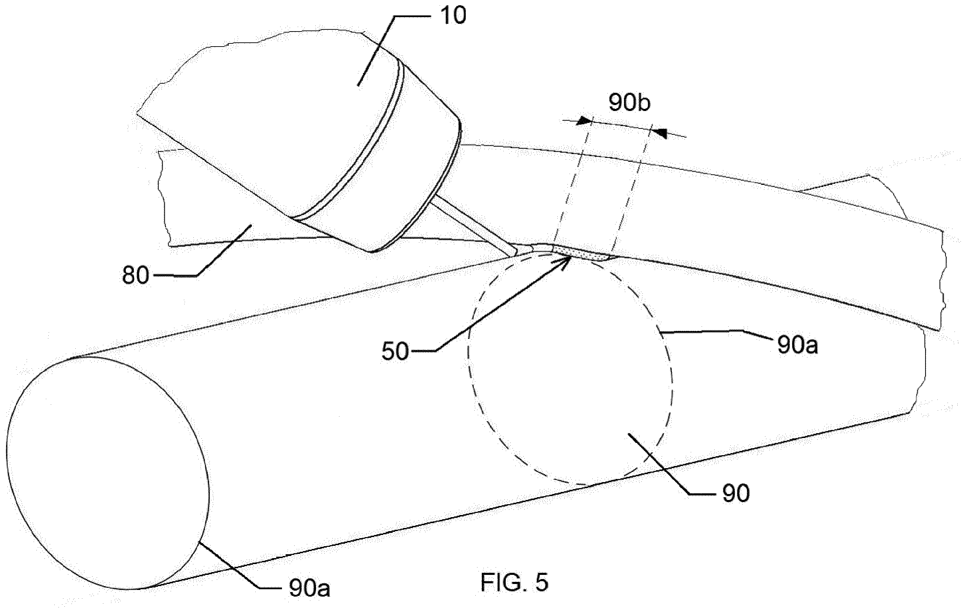

It is precisely thanks to such a rotation of the welding torch (10) around the axis (O) that the welding torch (10) can realize a welding seam (50) that extends along a section (90a) of the circumference (90b) of the bar (90), said section (90a) being disposed astride the tangential intersection point of the wire spiral (80) with the bar (90), as shown in Fig. 5.

Otherwise said, during said travel according to the arrow (FE), the welding torch (10) is moved forward in opposite direction with respect to the carriage (19), which passively follows the roto-translation of the cage (99) that is being machined.

## Claims

1. Pile cage welding machine (100) for realizing a metal cage (99) composed of an annular set of bars (90), a wire spiral (80) being wound and welded around said bars (90) along a helical trajectory; said machine (100) comprising:
- an operating unit (U) suitable for winding said wire spiral (80) on the outside of said annular set of bars (90) along a helical trajectory, in such a way to realize said metal cage (99), wherein said operating unit (U) comprises an opposite pair of disks (4 and 5) that rotate synchronically around an axis (Y) and support said annular set of bars (90), making them rotate and translate relative to said axis (Y);
- a handling and transportation unit (25) of said wire spiral (80), which is moved forward in orthogonal direction relative to said axis of rotation (Y), in such a way to tangentially intersect said annular set of bars (90) until said annular set of bars (90) is driven into rotation by said rotating disks (4 and 5);
- a linear welding unit (G) comprising a welding torch (10) mounted on a carriage (19) provided with a forked hook (40) for fastening a bar (90) at a time during the rotation of the rotating disks (4 and 5), and provided with a pair of idle pulleys (20) with grooves that are permanently engaged with the outside of the wire spiral (80);
machine (100) **characterized in that** said welding torch (10) is mounted on the carriage (19) with the interposition of a set of levers (31, 32 and 33) driven by a motor (30) and suitably configured to impose simultaneous autonomous travels on the welding torch (10) relative to the carriage (19), and suitably configured to maintain the welding torch (10) in parallel position to itself during said autonomous travels and, during use, realize a welding seam (50) that extends for a section (90b) of the circumference (90a) of the bar (90), said section (90b) being disposed astride the tangential intersection point of the wire spiral (80) with the bar (90).

2. The pile cage welding machine (100) according to the preceding claim, wherein said welding torch (10) is mounted on a first crank (32) that oscillates around an axis of rotation (O) and is coupled with a connecting rod (31) which is coupled in turn with a second crank (33) that oscillates around an axis of rotation (O') and is directly actuated by said motor (30).

3. The pile cage welding machine (100) according to one of the preceding claims, wherein said carriage (19) is articulatedly supported by a fixed frame (19a), said carriage (19) being capable of making the following travels relative to said fixed frame (19a):
- alternate translation travels (FX) along an axis (X) parallel to said axis (Y);
- alternate translation travels (FZ) along an axis (Z) orthogonal to said axis (X);
- alternate rotation travels (FC) around said axis (Z);
- alternate translation travels (FB) along an axis (B) perpendicular to said two axes (X and Z).

4. The pile cage welding machine (100) according to one of the preceding claims, wherein said operating unit (U) comprises a supporting and guiding base (1) for an opposite pair of identical heads (2 and 3), of which only one head (3) is movable and slides along a parallel direction to said axis (Y); said heads (2 and 3) respectively house said synchronically rotating disks (4 and 5), each one of said disks (4 and 5) being provided with an identical annular set of bushings, in the same number as the bars (90) of the cage (99) to be realized.

5. The pile cage welding machine (100) according to the preceding claim, wherein the bushings (5a) disposed in the disk (5) mounted on the movable head (3) are suitable for supporting and tightening the bar (90) that is inserted through them, whereas the bushings (4a) disposed in the disk (4) mounted on the fixed head (2) are suitable for supporting and guiding the bar (90) inserted through them, with the possibility of sliding freely.

6. Welding method implemented by means of the pile cage machine (100) according to one of the preceding claims, and comprising the following operating steps:
- winding of a wire spiral (80) on the outside of an annular set of bars (90) along a helical trajectory, imposing a simultaneous rotation relative to an axis of rotation (Y) and a simultaneous translation along a parallel direction to said axis (Y) on said annular set of bars (90);
- handling and transportation of said wire spiral (80) that is moved forward in orthogonal direction to said axis of rotation (Y), in such a way to tangentially and externally intersect said annular set of bars (90);
- realization of a welding seam (50) that extends for a section (90b) of the circumference (90a) of the bar (90), said section (90b) being disposed astride the tangential intersection point of the wire spiral (80) with the bar (90); said welding seam (50) being realized with a welding torch (10) articulatedly mounted on a carriage (19) with the interposition of a set of levers (31, 32 and 33) actuated by a motor (30) that impose simultaneous autonomous travels on the welding torch (10) relative to the carriage (19), said welding torch (10) being maintained in parallel position to itself during said autonomous travels; wherein said carriage (19) is provided with a forked hook (40) for fastening a bar (90) at a time during the motion of said bars (90) relative to the axis (Y).

## Patentansprüche

1. Korbschweißmaschine (100) zur Herstellung eines Metallkorbes (99), umfassend eine ringförmige Reihe von Stäben (90), eine Drahtspirale (80), die entlang einer schraubenförmigen Bahn um die Stäbe (90) gewickelt und geschweißt wird; wobei die Maschine (100) umfasst:
- eine Bedieneinheit (U), die dazu geeignet ist, die Drahtspirale (80) entlang einer schraubenförmigen Bahn über die Außenseite der ringförmigen Reihe von Stäben (90) zu wickeln, so dass der Metallkorb (99) hergestellt wird, wobei die Bedieneinheit (U) ein gegenüberliegendes Paar von Scheiben (4 und 5) umfasst, die synchron um eine Achse (Y) drehbar sind, die ringförmige Reihe von Stäben (90) stützen und ihnen sowohl eine Drehbewegung als auch eine Translationsbewegung relativ zur Achse (Y) auferlegen;
- eine Handhabungs- und Transporteinheit (25) für die Drahtspirale (80), die in rechtwinkliger Richtung relativ zu der Drehachse (Y) vorwärtsbewegt wird, so dass sie die ringförmige Reihe von Stäben (90) tangential schneidet, bis die ringförmige Reihe von Stäben (90) von den sich drehenden Scheiben (4 und 5) in Drehung versetzt wird;
- eine lineare Schweißeinheit (G), umfassend einen Schweißbrenner (10), der auf einem Schlitten (19) montiert ist, der mit einem Gabelhaken (40) versehen ist, um jeweils einen Stab (90) während der Drehung der sich drehenden Scheiben (4 und 5) zu befestigen, und mit einem Paar von losen Rollen (20) versehen ist, deren Nuten dauerhaft mit der Außenseite der Drahtspirale (80) in Eingriff stehen;
wobei die Maschine (100) **dadurch gekennzeichnet ist, dass** der Schweißbrenner (10) auf dem Schlitten (19) unter Einfügung eines Satzes von Hebeln (31, 32 und 33) montiert ist, die von einem Motor (30) angetrieben werden und entsprechend konfiguriert sind, um dem Schweißbrenner gleichzeitige, eigenständige Bewegungen relativ zu dem Schlitten (19) aufzuerlegen, und entsprechend konfiguriert sind, um den Schweißbrenner (10) während der eigenständigen Bewegungen in paralleler Position zu sich selbst zu halten und während des Gebrauchs eine Schweißnaht (50) zu erzeugen, die sich über einen Abschnitt (90b) des Umfangs (90a) des Stabes (90) erstreckt, wobei der Abschnitt (90b) rittlings über dem tangentialen Schnittpunkt der Drahtspirale (80) mit dem Stab (90) angeordnet ist.

2. Korbschweißmaschine (100) nach dem vorstehenden Anspruch, wobei der Schweißbrenner (10) auf einer ersten Kurbel (32) montiert ist, die um eine Drehachse (O) schwenkbar ist und mit einer Verbindungsstange (31) gekoppelt ist, die ihrerseits mit einer zweiten Kurbel (33) gekoppelt ist, die um eine Drehachse (O') schwenkbar ist und direkt von dem Motor (30) betätigt wird.

3. Korbschweißmaschine (100) nach einem der vorstehenden Ansprüche, wobei der Schlitten (19) durch einen festen Rahmen (19a) gelenkig gelagert ist, wobei der Schlitten (19) in der Lage ist, relativ zu dem festen Rahmen (19a) folgende Bewegungen auszuführen:
- alternierende Translationsbewegungen (FX) entlang einer Achse (X), die parallel zur Achse (Y) verläuft;
- alternierende Translationsbewegungen (FZ) entlang einer Achse (Z), die rechtwinklig zur Achse (X) verläuft;
- alternierende Drehbewegungen (FC) um die Achse (Z);
- alternierende Translationsbewegungen (FB) entlang einer Achse (B), die senkrecht zu den beiden Achsen (X und Z) verläuft.

4. Korbschweißmaschine (100) nach einem der vorstehenden Ansprüche, wobei die Bedieneinheit (U) einen Trag- und Führungssockel (1) für ein Paar von gegenüberliegenden, identischen Köpfen (2 und 3) umfasst, von denen nur ein Kopf (3) bewegbar ist und entlang einer Richtung parallel zur Achse (Y) gleitet; wobei die Köpfe (2 und 3) jeweils die sich synchron drehenden Scheiben (4 und 5) aufnehmen, wobei jede der Scheiben (4 und 5) mit einer identischen ringförmigen Reihe von Buchsen in der gleichen Anzahl wie die Stäbe (90) des herzustellenden Korbes (99) versehen ist.

5. Korbschweißmaschine (100) nach dem vorstehenden Anspruch, wobei die Buchsen (5a), die in der Scheibe (5) angeordnet sind, die auf dem beweglichen Kopf (3) montiert ist, dazu geeignet sind, den Stab (90), der durch sie hindurchgeht, zu tragen und festzuziehen, während die Buchsen (4a), die in der Scheibe (4) angeordnet sind, die auf dem festen Kopf (2) montiert ist, dazu geeignet sind, den Stab (90), der durch sie hindurchgeht, zu tragen und zu führen, mit der Möglichkeit, frei zu gleiten.

6. Schweißverfahren, implementiert mittels der Korbschweißmaschine (100) nach einem der vorstehenden Ansprüche und umfassend die folgenden Bedienschritte:
- Wickeln einer Drahtspirale (80) entlang einer schraubenförmigen Bahn über die Außenseite einer ringförmigen Reihe von Stäben (90), wobei der ringförmigen Reihe von Stäben (90) eine gleichzeitige Drehbewegung relativ zu einer Drehachse (Y) sowie eine gleichzeitige Translationsbewegung entlang einer Richtung parallel zur Achse (Y) auferlegt wird;
- Handhaben und Transportieren der Drahtspirale (80), die in rechtwinkliger Richtung relativ zu der Drehachse (Y) vorwärtsbewegt wird, so dass sie die ringförmige Reihe von Stäben (90) außen tangential schneidet;
- Ausführen einer Schweißnaht (50), die sich über einen Abschnitt (90b) des Umfangs (90a) des Stabes (90) erstreckt, wobei der Abschnitt (90b) rittlings über dem tangentialen Schnittpunkt der Drahtspirale (80) mit dem Stab (90) angeordnet ist; wobei die Schweißnaht (50) mit einem Schweißbrenner (10) ausgeführt wird, der gelenkig auf einem Schlitten (19) unter Einfügung eines Satzes von Hebeln (31, 32 und 33) montiert ist, die von einem Motor (30) betätigt werden, der dem Schweißbrenner (10) eigenständige, gleichzeitige Bewegungen relativ zu dem Schlitten (19) auferlegt, wobei der Schweißbrenner (10) während der eigenständigen Bewegungen in paralleler Position zu sich selbst gehalten wird; wobei der Schlitten (19) mit einem Gabelhaken (40) versehen ist, um jeweils einen Stab (90) während der Bewegung der Stäbe (90) relativ zur Achse (Y) zu befestigen.

## Revendications

1. Cageuse (100) pour la production d'une cage métallique (99) composée d'une série annulaire de barres d'armature (90) autour desquelles est enroulé et soudé, le long d'une trajectoire hélicoïdale, un fil spirale (80), ladite cageuse (100) comprenant :
- une unité opérationnelle (U) apte à enrouler, selon une trajectoire hélicoïdale, ledit fil spirale (80) à l'extérieur de ladite série annulaire de barres d'armature (90), en réalisant ainsi ladite cage métallique (99), où ladite unité opérationnelle (U) comprend une paire opposée de disques (4 et 5), pivotants synchroniquement autour d'un axe (Y), lesdits disques soutenant ladite série annulaire de barres d'armature (90), en leur imposant tant un mouvement de rotation qu'un mouvement de translation par rapport au dit axe (Y) ;
- une unité de manipulation et transport (25) dudit fil spirale (80), qui est déplacée en avant en direction orthogonale au dit axe de rotation (Y), de façon à couper tangentiellement ladite série annulaire de barres d'armature (90), jusqu'à ce que ladite série annulaire de barres d'armature (90) est entraînée en rotation par lesdits disques pivotants (4 et 5) ;
- un groupe de soudage à friction linéaire (G), comprenant une torche de soudage (10) montée à bord d'un chariot (19), muni tant d'un crochet à fourche (40) qui lui permet de s'accrocher à une barre d'armature (90) à la fois pendant la rotation des disques pivotants (4 et 5), que d'une paire de poulies folles (20) dont les gorges s'engagent de manière permanente avec l'extérieur du fil spirale (80) ;
cageuse (100) **caractérisée en ce que** ladite torche de soudage (10) est montée à bord du chariot (19) moyennant l'interposition d'un jeu de leviers (31, 32 et 33), actionnés par un moteur (30), configurés de manière à imposer à la torche de soudage (10) des déplacements autonomes et simultanés par rapport au chariot (19), et configurés pour maintenir la torche de soudage (10) parallèle à elle-même, pendant lesdits déplacements autonomes, et réaliser, pendant l'usage, un joint de soudure (50), qui se déploie pour un segment (90b) de la circonférence (90a) de la barre d'armature (90), ledit segment (90b) étant positionné à cheval du point tangentiel d'intersection du fil spirale (80) avec la barre d'armature (90).

2. Cageuse (100) selon la revendication précédente, où ladite torche de soudage (10) est montée sur une première manivelle (32), oscillante autour d'un axe de rotation (O) et couplée à une bielle (31), à son tour couplée à une seconde manivelle (33), qui oscille autour d'un axe de rotation (O') et qui est actionnée directement par ledit moteur (30).

3. Cageuse (100) selon l'une quelconque des revendications précédentes, où ledit chariot (19) est soutenu, de manière articulée, par un châssis fixe (19a), ledit chariot étant en mesure d'accomplir les déplacements suivants par rapport au dit chariot fixe (19a) :
- des déplacements de translation alternés (FX) le long d'un axe (X) parallèle au dit axe (Y) ;
- des déplacements de translation alternés (FZ) le long d'un axe (Z) orthogonal au dit axe (X) ;
- des déplacements de rotation alternés (FC) autour dudit axe (Z) ;
- des déplacements de translation alternés (FB) le long d'un axe (B) perpendiculaire aux deux dits axes (X et Z).

4. Cageuse (100) selon l'une quelconque des revendications précédentes, où ladite unité opérationnelle (U) comprend un socle de support et de guide (1) pour une paire opposée de têtes identiques (2 et 3), dont une seule (3) mobile et coulissante le long d'une direction parallèle au dit axe (Y) ; lesdites têtes (2 et 3) logeant respectivement lesdits disques (4 et 5) pivotants synchroniquement, chacun desdits disques (4 et 5) étant muni d'un jeu annulaire identique de douilles dont le nombre est égal à celui des barres d'armature (90) de la cage (99) à fabriquer.

5. Cageuse (100) selon la revendication précédente, où les douilles (5a) positionnées dans le disque (5) monté à bord de la tête mobile (3) sont aptes à soutenir et serrer la barre d'armature (90) qui les traverse, tandis que les douilles (4a) positionnées dans le disque (4) monté à bord de la tête fixe (2) sont aptes à soutenir et guider la barre d'armature (90) qui les traverse en la laissant librement coulisser à leur interne.

6. Méthode de soudage mise en oeuvre par le biais de la cageuse, (100) selon l'une des revendications précédentes et comprenant les phases opérationnelles suivantes :
- enroulement, selon une trajectoire hélicoïdale, d'un fil spirale (80) à l'extérieur d'une série annulaire de barres d'armature (90), en leur imposant un mouvement de rotation simultané par rapport à un axe de rotation (Y), ainsi qu'un mouvement de translation simultané le long d'une direction parallèle au dit axe (Y) ;
- manipulation et transport dudit fil spirale (80) qui est déplacé en avant en direction orthogonale au dit axe de rotation (Y), de façon à couper tangentiellement et extérieurement ladite série annulaire de barres d'armature (90) ;
- exécution d'un joint de soudure (50) qui se déploie pour un segment (90b) de la circonférence (90a) de la barre d'armature (90), étant ledit segment (90b) positionné à cheval du point tangentiel d'intersection du fil spirale (80) avec la barre d'armature (90) ; ledit joint de soudure (50) s'effectuant moyennant une torche de soudage (10) montée, de manière articulée, à bord d'un chariot (19) via l'interposition d'un jeu de leviers (31, 32, 33) actionnés par un moteur (30) qui impose des déplacements autonomes et simultanés à la torche de soudage (10) par rapport au chariot (19), en maintenant ladite torche de soudage (10) en position parallèle à elle-même pendant lesdits déplacements autonomes ; où ledit chariot (19) est muni d'un crochet à fourche (40) qui lui permet de s'accrocher à une barre d'armature (90) à la fois pendant le mouvement desdites barres d'armature (90) par rapport à l'axe (Y).
